(19) Europäisches Patentamt
European Patent Office
Office européen des brevets

(11) Veröffentlichungsnummer: **0 281 124 B1**

(12) # EUROPÄISCHE PATENTSCHRIFT

(45) Veröffentlichungstag der Patentschrift: **17.06.92**

(51) Int. Cl.⁵: **C09K 3/00**, C08K 9/04, C09D 5/04

(21) Anmeldenummer: **88103240.3**

(22) Anmeldetag: **03.03.88**

(54) **Thixotrope Zubereitungen, Verwendung von Polycarbonsäureamiden zu ihrer Herstellung und mit Polycarbonsäureamiden beschichtetes Siliciumdioxid.**

(30) Priorität: **04.03.87 DE 3706860**

(43) Veröffentlichungstag der Anmeldung:
**07.09.88 Patentblatt 88/36**

(45) Bekanntmachung des Hinweises auf die Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**DD-A- 241 262**
**DE-A- 3 230 736**
**US-A- 4 216 135**
**US-A- 4 238 387**

**ANGEWANDTE CHEMIE, Band 72, 1960, Weinheim/Bergstr. E.WAGNER et al. "Aerosil, Herstellung, Eigenschaften und Verhalten in organischen FlUssigkeiten" Seiten 744-750**

(73) Patentinhaber: **Byk-Chemie GmbH**
**Abelstrasse 14**
**W-4230 Wesel(DE)**

(72) Erfinder: **Haubennestel, Karlheinz**
**Hermann-Hesse-Strasse 30**
**W-4230 Wesel(DE)**
Erfinder: **Heilman, Holger**
**Storchenweg 6**
**W-4236 Hamminkeln 4(DE)**
Erfinder: **Diez, Andreas, Dr.**
**Am Blaufuss 11**
**W-4230 Wesel(DE)**

(74) Vertreter: **Türk, Gille, Hrabal**
**Brucknerstrasse 20**
**W-4000 Düsseldorf 13(DE)**

**EP 0 281 124 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft thixotrope Zubereitungen mit einem Gehalt an hochdispersem Siliciumdioxid, hydroxyfunktionelle Polycarbonsäureamide der nachfolgend näher bezeichneten Art, die zur Herstellung solcher thixotropen Zubereitungen verwendet werden, sowie hochdisperses Silicumdioxid, das mit solchen hydroxyfunktionellen Polycarbonsäureamiden beschichtet ist.

Thixotrope Zubereitungen mit einem Gehalt an hochdispersem Siliciumdioxid sind in großer Vielfalt bekannt. Zur Erzeugung der Thixotropie wird hochdisperses Siliciumdioxid verwendet, welches nach nassen oder pyrogenen Verfahren hergestellt wird (Herstellung z.B.: E. Wagner, H. Brünner, Angew. Chem. 72,744 (1960) und normalerweise eine spezifische Oberfläche (BET-Methode DIN 66131) von ca. 50 bis 400 $m^2/g$ aufweist. Solche hochdispersen Siliciumdioxide werden in der Fachliteratur häufig auch als hydrophile oder kolloide amorphe Kieselsäuren bezeichnet. (Siehe auch US-A-4,238,387)

Diese Siliciumdioxide werden in unterschiedlichsten Anwendungsbereichen als verdickende oder thixotropierende Komponente flüssigen Systemen zugesetzt. Die typischen Eigenschaften eines solchen Siliciumdioxids bestimmen die Wirksamkeit als Verdickungsmittel und Thixotropierungsmittel.

Wird solches Silicumdioxid in Zubereitungen wie Flüssigkeiten oder Harzlösungen dispergiert, verbinden sich die kettenförmigen Formationen über H-Brückenbindungen miteinander und bilden ein dreidimensionales Netzwerk. Dieser Vorgang verringert dadurch die Fließfähigkeit der Flüssigkeit oder der Harzlösung. Wird durch Einwirkung von Scherkräften dieses Netzwerk zerstört, sinkt die Viskosität und baut sich während einer gewissen Regenerationszeit wieder auf. Diesen Vorgang bezeichnet man allgemein als Thixotropie. Thixotropie ist also eine zeitabhängige, umkehrbare und wiederholbare Konsistenzänderung, die bei Beginn und Ende der Einwirkung von Scherkräften auftritt (J. Schiefer, defazet 31 Jg. Nr. 2, 1977 S. 62-65).

Dieser Thixotropieeffekt wird ausgenutzt, um z.B. das Absacken oder Ablaufen von Harzlösungen, Dichtungsmassen, Klebern, Plastisolen, Anstrichstoffen, Spachtelmassen und Gießharzen zu verhindern, aber auch, um z. B. Mineralölen eine viskosere Konsistenz zu verleihen. In manchen Zubereitungen neigt die Kieselsäure zum Absetzen. Unter Absetzen soll eine nicht gleichmäßige Verteilung des $SiO_2$ in vertikaler Ebene des Systems verstanden werden. Dies ist besonders kritisch, wenn solche kieselsäurehaltigen Dispersionen über längere Zeit in Behältern transportiert werden, d.h., mechanischen Belastungen ausgesetzt sind. Diesem Verhalten versucht man entgegenzuwirken, indem man die $SiO_2$-Konzentration erhöht, um hierdurch zu einem Punkt zu gelangen, wo genügend $SiO_2$-Ketten vorhanden sind, um über Wasserstoffbrücken verbunden zu werden und somit scherstabilere Systeme aufzubauen. In bestimmten Lösungen wie z. B. Vinylesterharze in Styrol, ist mit hydrophilem $SiO_2$ kaum ein thixotropiegebender Effekt zu erhalten.

Eine Erhöhung der $SiO_2$-Konzentration bis zum stabilen Zustand ist jedoch nicht in allen Fällen angebracht, da zu hohe $SiO_2$-Konzentrationen in vielen technischen Anwendungen zu Störungen führen, die sich z. B. in unerwünschten Mattierungseffekten in glänzend eingestellten Beschichtungsformulierungen oder aber im Nachlassen der Festigkeit in ungesättigten Polyesterharzsystemen äußern (SPI 21. Meeting: Corrosion resistance polyester resins by P. Trend, D. Edwards and P.V. Bramer).

In Zubereitungen, welche selbst stärkere H-Brückenbildungen ausbilden, kann der thixotropiegebende Effekt von $SiO_2$ wesentlich geschwächt werden. Viele Hersteller von hochdispersem $SiO_2$ geben in ihren Dokumentationen Hilfsmittel an, welche die Thixotropiewirkung von $SiO_2$ in unterschiedlichen polaren Systemen steigern können. Dabei werden zahlreiche Produkte beschrieben, welche die Viskosität, Thixotropie und das Absetzverhalten von $SiO_2$ in Zubereitungen positiv beeinflussen sollen. Die genannten Produkte umfassen beispielsweise niedermolekulare Glykole, niedermolekulare Diamine, Polyamine, Carbonsäuren, Sulfonsäuren, Ethylenoxidaddukte, Sorbitanester, alkoxilierte Sorbitanester, Polyethylenglykole und Wasser. (Firmenbroschüren: Degussa, Aerosil als Verdickungsmittel für Flüssigkeiten und Cabot, Cabosil S. 18).

Zur Charakterisierung des Fließverhaltens werden üblicherweise Rotationsviskosimeter eingesetzt.
Hierbei wird für verschiedene Schergeschwindigkeiten (D) die Schubspannung ($\tau$) ermittelt. Als Maß für die Thixotropie wird, wie dem Fachmann bekannt ist, die Hysteresefläche ($L = \tau . D$) zwischen der Kurve bei steigender Schergeschwindigkeit und der Kurve bei fallender Schergeschwindigkeit herangezogen (Firmenbroschüre: Haake, Einführung in die praktische Viskosimetrie, S. 17-19).
Diese vorgeschlagenen Produkte erhöhen die Viskosität des flüssigen Systems ohne wesentlichen Einfluß zu nehmen auf die Thixotropie im Sinne der oben gegebenen Definition, nämlich die Ausbildung einer ausgeprägten Hysteresefläche (L).

Im Falle der niedermolekularen Verbindungen sind die positiven Effekte oft nur von kurzer Dauer, da die Wasserstoffbrückenbindungen zwischen $SiO_2$-Partikeln durch Umlagerungseffekte mit Lösungsmitteln oder niedermolekularen Harzanteilen aufgehoben werden können. Im Falle der aminhaltigen Komponenten

können besonders bei ungesättigten Polyesterharzen, Vinylesterharzen und Epoxyharzen Reaktionen mit dem Harz auftreten, so daß diese Verbindungen für solche Harzsysteme nicht besonders vorteilhaft sind. In Nitrocelluloselacken und PVC-Plastisolen treten mit aminhaltigen Verbindungen Verfärbungen auf.

In der US-A-4,238,387 ist beschrieben, eine pseudoplastische Rheologie von Überzugszusammensetzungen dadurch zu erreichen, daß diese feinverteiltes Siliciumdioxid, eine polyfunktionelle säure und ein Amin in Kombination enthalten. Die Verwendung einer Säure allein oder eines Amins allein zusätzlich zum Siliciumdioxid ergibt keinen Effekt. Es ist also wesentlich, daß in der Überzugszusammensetzung die polyfunktionellen Säuren oder Säureanhydride mit Carboxylgruppen oder Anhydridgruppen einerseits und Amine mit ihren Amingruppen andererseits enthalten sind. Als Amine können solche mit oder ohne Hydroxlgruppen verwendet werden. Es können primäre, sekundäre oder tertiäre Amine eingesetzt werden. Als Säuren können gewisse organische oder anorganische Säuren oder deren Anhydride verwendet werden. Beiläufig ist in Spalte 2, Zeilen 66 bis 69 erwähnt, daß die Säure oder ihr Anhydrid mit dem Amin umgesetzt und dann zur $SiO_2$-Dispersion gegeben werden können. Nach der gesamten Lehre der US-A-4,238,387 kann darunter nur eine Salzbildung verstanden werden. Im Gegensatz hierzu wurde nun gefunden, daß die speziellen hydroxyfunktionellen Polyamide der Formel I in unterschiedlichen Zubereitungen Siliciumdioxid aktivieren bzw. dessen Wirkung verstärken, und zwar auch in solchen Zubereitungen, in denen die Gemische der genannten Literaturstelle nahezu unwirksam sind, wie Zubereitungen enthaltend Vinylester als Bindemittel.

Unter allen beschriebenen Hilfsmitteln ist keines bekannt, welches ein breites Anwendungsgebiet aufweist und in unterschiedlich polaren Zubereitungen eine ausreichende Thixotropie zusammen mit $SiO_2$ aufbaut, also eine breite Anwendbarkeit zeigt und eine Thixotropie im Sinne der oben angegebenen Definition, nämlich der Bildung einer ausgeprägten Hysteresefläche (L) aufbaut.

Der Erfindung liegt deshalb die Aufgabe zugrunde, Mittel zu finden, welche es möglich machen in unterschiedlichen Zubereitungen das eingesetzte Siliciumdioxid zu aktivieren bzw. dessen Wirkung zu verstärken. Überraschenderweise konnte, neben einer deutlichen Erhöhung von Viskosität und Fließgrenze diese Aufgabe weitgehend gelöst werden mit Verbindungen der nachfolgend beschriebenen Art.

Gegenstand der Erfindung sind thixotrope Zubereitungen mit einem Gehalt an hochdispersem Siliciumdioxid, dadurch gekennzeichnet, daß sie hydroxyfunktionelle Polycarbonsäureamide folgender Formel I enthalten:

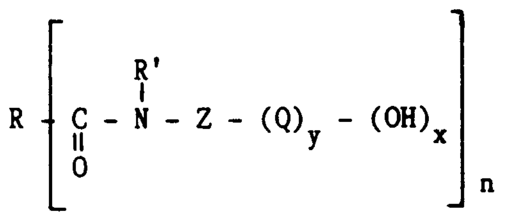

(I)

wobei die Symbole die folgenden Bedeutungen haben:

- R = aliphatische Kohlenwasserstoffgruppen mit 2 bis 60 C-Atomen oder aromatische Kohlenwasserstoffgruppen mit 6 bis 20 C-Atomen oder aliphatische oder aliphatisch/aromatische Kohlenwasserreste mit 6 bis 150 C-Atomen, die durch 2, 4, 6 oder 8 Carbonamidgruppen unterbrochen sind, oder aliphatische Kohlenwasserstoffreste mit 4 bis 150 C-Atomen, die durch 2 bis 75 -O-(Sauerstoff) Gruppen unterbrochen sind
- R′ = H, oder $C_1$ bis $C_4$ Alkyl, oder $-Z'-(Q)_y-(OH)_x$
- x = 1 bis 3
- y = 0 oder 1
- Z = Alkylenrest mit 2 bis 6 C-Atomen
- Z′ = Alkylenrest, welcher gleich oder ungleich Z ist, mit 2 bis 6 C-Atomen
- Q = aliphatischer Kohlenwasserstoffrest mit 2 bis 200 C-Atomen welcher über

-O- oder 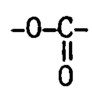

mit Z oder Z′ verbunden ist und durch null bis 99 Sauerstoffatome und/oder Carbonsäureestergruppen unterbrochen ist
n = 2 bis 3.

Die Thixotropen Zubereitungen enthalten die Verbindungen der Formel I in einer Menge, die eine Aktivierung bzw. Verstärkung des in den Zubereitungen enthaltenen hochdispersen Siliciumdioxids bewirkt. Die entsprechende Menge kann mit zumutbarem Denkaufwand, wozu auch die Durchführung üblicher Versuche gehört, ermittelt werden. Die jeweilig wirksame Konzentration und insbesondere die jeweilig optimale Konzentration ist von Zubereitung zu Zubereitung verschieden in Abhängigkeit von z.B. Polarität, Art der vorhandenen Harze und Lösungsmittel usw.

Der Ausdruck "aliphatische" in Zusammenhang mit dem Symbol R umfaßt gemäß der Erfindung auch cycloaliphatische Gruppen.

Die erfindungsgemäß eingesetzten Produkte werden hergestellt, indem Polycarbonsäuren oder deren Derivate mit Alkanolaminen und gegebenenfalls mit Diaminen so umgesetzt werden, daß Polycarbonsäurealkanolamide oder Polyamidocarbonsäurealkanolamide entstehen.

Als Polycarbonsäuren können solche Verbindungen eingesetzt werden, welche mindestens 2 Carboxyl-Gruppen an einem gemeinsamen aliphatischen oder aromatischen Kohlenwasserstoffrest enthalten, welcher durch Carbonamidgruppen oder -O- Gruppen (Sauerstoff) unterbrochen sein kann. Es können entsprechend auch die Derivate dieser Carbonsäuren verwendet werden, die geeignet sind mit primären oder sekundären Aminen Carbonsäureamide zu bilden. Solche Derivate sind z. B. Carbonsäureester, Carbonsäurehalogenide oder Carbonsäureanhydride.

Im erfindungsgemäßen Sinn können als Polycarbonsäuren bzw. deren Derivate z. B. Bernsteinsäure, Bernsteinsäureanhydrid, Alkenylbernsteinsäureanhydride wie z. B. 2-Dodecen-1-ylbernsteinsäureanhydrid, Glutarsäure, Adipinsäure, Pimelinsäure, Suberinsäure, Azelainsäure, Sebacinsäure, Decandicarbonsäure, dimerisierte Fettsäuren, trimerisierte Fettsäuren, 1,4-Cyclohexandicarbonsäure, 1,2-Cyclohexandicarbonsäure, 1,2-Cyclohexandicarbonsäureanhydrid, Tetrahydrophthalsäure, Phthalsäure, Phthalsäureanhydrid, Isophthalsäure, Terephthalsäure, Trimellithsäure, 3,6,9-Trioxandecandisäure, Polyglykoldisäure ($\alpha$-Carboxymethyl-$\omega$-carboxymethoxypolyoxyethylen) oder Mischungen dieser Säuren eingesetzt werden.

Dimerisierte Fettsäuren (Dimerfettsäuren) werden nach bekannten Verfahren hergestellt, z.B. (DE-A-14 43 938, DE-A-14 43 968, DE-C-21 18 702 und DE-C-12 80852). Es handelt sich bei diesen dimerisierten Fettsäuren um polymerisierte ungesättigte natürliche oder synthetische aliphatische Säuren mit 12 bis 22 Kohlenstoffatomen, bevorzugt 18 Kohlenstoffatomen (Tallöl). Die technischen Produkte enthalten zusätzlich zu den dimerisierten Säuren geringe Mengen (etwa 0.1 bis 3%) der eingesetzten monomeren Säuren und trimere Säuren. Die trimeren Säuren können auch in größerer Menge vorhanden sein, da diese ebenfalls hochwirksame Produkte ergeben, vergleiche Herstellungsbeispiel 9 und Anwendungsbeispiel A3. Es ist deshalb möglich technische Produkte einzusetzen, die bis etwa 30 % trimere Säuren enthalten. Die dimerisierten Fettsäuren können auch hydriert sein. Bevorzugt sind aliphatische Dicarbonsäuren und Polyglykoldisäuren. Besonders bevorzugt sind dimerisierte Fettsäuren.

Demzufolge steht das Symbol R bevorzugt für eine aliphatische Kohlenwasserstoffgruppe mit mindestens 6 C-Atomen. Die Obergrenze liegt zweckmäßig bei 44 C-Atomen. Besonders bevorzugt enthält diese Gruppe 34 bis 42 C-Atome. Eine besonders bevorzugte Gruppe von Verbindungen sind solche, in denen R den Rest von Dimerfettsäuren darstellt.

Eine andere bevorzugte Ausführungsform besteht darin, daß R für einen aliphatischen Kohlenwasserstoffrest mit 6 - bis 26 C-Atomen steht, der durch 3 bis 13 Sauerstoffatome unterbrochen ist.

Als Diamine zur Kettenverlängerung der Polycarbonsäuren zu Polycarbonsäurepolyamiden können aliphatische und cycloaliphatische Diamine wie z. B. Ethylendiamin, 1,2-Propylendiamin, 1,3-Diaminopropan, 1,4-Butandiamin, Neopentandiamin, 4,4-Diaminodicyclohexylmethan, 3-Aminomethyl-3,5,5-trimethylcyclohexylamin (Isophorondiamin), Hexamethylendiamin, 1,12-Dodecandiamin oder Mischungen solcher geeigneter Diamine eingesetzt werden. Bevorzugt sind aliphatische Diamine mit 2 bis 6 C-Atomen, weil diese technisch leicht zugänglich und verfügbar sind.

Es gibt verschiedene Möglichkeiten, um Reste R zu erhalten, die 2, 4, 6 oder 8 Carbonamidgruppen enthalten. Beispielsweise können die Carbonsäuren mit Diaminen umgesetzt werden. Wenn ein Mol Diamin mit zwei Mol Dicarbonsäure zur Reaktion gebracht werden, erhält man einen Rest R, der zwei Carbonamidgruppen aufweist, bei dem also die oben genannten Kohlenwasserstoffgruppen durch zwei Carbonamidgruppen unterbrochen sind. Es können aber auch unter Kettenverlängerung mehrere Moleküle Dicarbonsäure und Diamin miteinander verknüpft werden, so daß der durch das Symbol R dargestellte Rest mehr als 2 Carbonamidgruppen enthält, d.h., die jeweilige Kohlenwasserstoffgruppe durch mehr als 2 Carbonamidgruppen unterbrochen ist. Die Ausgangskomponenten sind naturgemäß so zu wählen, daß unerwünschte übermäßige Vernetzungsreaktionen dabei vermieden werden.

Das Symbol R steht nach einer bevorzugten Ausführungsform für einen aliphatischen Kohlenwasserstoffrest

mit 70 bis 90 C-Atomen, der durch zwei Carbonamidgruppen unterbrochen ist. Es handelt sich bei solchen Gruppen bevorzugt um den Rest von zwei Molekülen Dimerfettsäure, die durch Diamin miteinander verknüpft sind.

Soll Kettenverlängerung der Polycarbonsäuren vorgenommen werden durch Umsetzung mit Diaminen unter Amidbildung, wird vorzugsweise diese Reaktion vorab so durchgeführt, daß aufgrund der eingesetzten molaren Mengenverhältnisse von Polycarbonsäuren und Diamin im Mittel mindestens 2 Carboxylgruppen an einem gebildeten Diamid unumgesetzt bleiben, bzw. für die Reaktion mit Alkanolaminen zur Verfügung stehen. Diese so hergestellten Polycarbonsäurepolyamide können erfindungsgemäß ebenfalls wie Polycarbonsäuren eingesetzt werden. Die Reaktion kann jedoch auch in einem Schritt unter Einsatz der entsprechenden molaren Mengen an Diamin und Alkanolamin bezogen auf die Polycarbonsäure durchgeführt werden.

Für die Umsetzung der Polycarbonsäuren oder Polycarbonsäurepolyamide zu Alkanolamiden werden z. B. Alkanolamine wie Ethanolamin, Diisopropanolamin, Aminoethylpropandiol, Diethanolamin, 2-Amino-1-propanol, 3-Amino-2,2-dimethyl-1-propanol, 2-Cyclohexylaminoethanol, 2-Methylaminoethanol, 2-(2-Aminoethoxy)-ethanol, 2-Amino-1-butanol, 2-Amino-2-methyl-1-propanol, 2-Amino-2-ethyl-1,3-propandiol und Tris-(hydroxymethyl)aminomethan eingesetzt. Bevorzugt ist Z ein Alkylenrest mit 2 oder 3 C-Atomen. Bevorzugt sind Alkanolamine mit zwei Hydroxylgruppen. Eine besonders bevorzugte Gruppe von Verbindungen der Formel I ist die, bei der das Symbol R′ für $-Z-(Q)_y-(OH)_x$ steht. Am Stickstoffatom in der eckigen Klammer der Formel I sind dann also zwei gleiche Reste gebunden.

Solche Verbindungen sind besonders leicht herstellbar, weil die entsprechenden Alkanolamine technisch verfügbar sind.

Die so hergestellten Polycarbonsäurealkanolamide bzw. Polyamidopolycarbonsäurealkanolamide können mit entsprechenden mit Hydroxylfunktionen reaktiven Komponenten wie Oxiranen oder cyclischen Estern (Lactonen) unter Ringöffnung und dadurch Bildung neuer Hydroxylfunktionen umgesetzt und so den Bedürfnissen entsprechend gegebenenfalls angepaßt werden, z.B., an polare System wie wasserhaltige Systeme durch Anlagerung einer oder mehrere Ethylenoxideinheiten an die Hydroxylgruppen. Beispiele für solche Oxirane sind Ethylenoxid, Propylenoxid, deren Mischungen und 2,3-Epoxy-1-propanol. Beispiele für solche Lactone sind $\beta$-Propiolacton, $\delta$-Valerolacton, $\epsilon$-Caprolacton oder deren substituierte Derivate. Beispiel für solche Lactone und die Verfahren zu deren Veresterung unter Ringöffnung können der US-A-43 60 643 entnommen werden. Die so erhaltenen Verbindungen sind solche der Formel I, worin für $(Q)_y$ $y = 1$ steht. Bevorzugt steht Q für einen aliphatischen Kohlenwasserstoffrest mit 2 bis 80 C-Atomen, der über

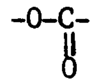

mit Z oder Z′ verbunden ist und durch null bis 39 Sauerstoffatome und/oder Carbonsäureestergruppen unterbrochen ist.

Die carboxylgruppenhaltigen Verbindungen und die Alkanolamine werden in Mol-Verhältnis von Carboxylgruppen zu Aminogruppen von 1:0,5 bis 1:10, bevorzugt von 1:0,5 bis 1:3, ganz besonders bevorzugt von 1:0,9 bis 1:1,3 miteinander umgesetzt. Für die Umsetzung werden die bekannten Verfahren für Amidierung von Carboxylgruppen oder deren Derivate eingesetzt.

Bei der Umsetzung von Alkanolaminen mit Carbonsäuren oder deren Derivaten können, wie dem Fachmann bekannt ist, zu bestimmten Anteilen die Ester neben den vorzugsweise zu bildenden Amiden entstehen. Die Forderung der Alkanolamidbildung kann jedoch als erfüllt betrachtet werden, wenn mindestens 50 % der gewünschten Carbonamidbindungen entstanden sind und der Rest als Carbonsäureester oder als Nebenprodukt vorliegt. Sämtliche Reaktionen können gemäß dem Stand der Technik entweder in Substanz oder in Gegenwart von geeigneten, die Reaktion nicht störenden Lösungsmitteln, durchgeführt werden. Besonders geeignet sind aromatische Kohlenwasserstoffe, da sie mit Wasser leicht Azeotrope bilden und somit das entstehende Reaktionswasser leicht aus dem Reaktionsgefäß entfernt werden kann. Weiterhin können die Umsetzungen in Gegenwart von üblichen Katalysatoren durchgeführt werden, wie p-Toluolsulfonsäure, Schwefelsäure, Trifluormethansulfonsäure sowie Titansäureestern.

Diese Reaktionsprodukte werden in der Regel nicht in reiner Form den Thixotropen Zubereitungen zugesetzt, sondern als technische Produkte, wie sie bei der Umsetzung von Polycarbonsäuren oder Polyamidocarbonsäuren mit Alkanolaminen anfallen.

Die Bildung der Polycarbonsäurealkanolamide folgt beispielhaft folgendem Reaktionsablauf:

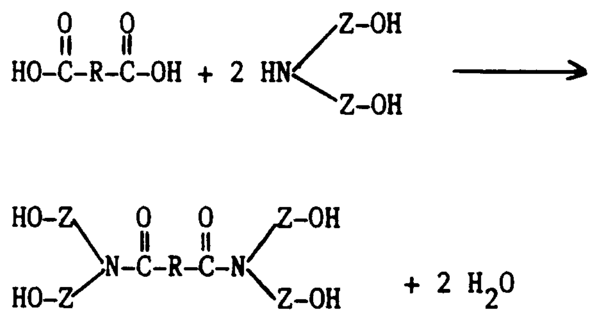

Wie dem Fachmann bekannt ist, erfolgt die Umsetzung der Polycarbonsäuren oder deren Derivate mit Diaminen in geeigneten Verhältnissen nach den gleichen Reaktionsbedindungen wie sie oben für die Amidbildung aus Polycarbonsäuren und Alkanolaminen beschrieben wurden. Die Reaktion läuft beispielhaft folgendermaßen ab:

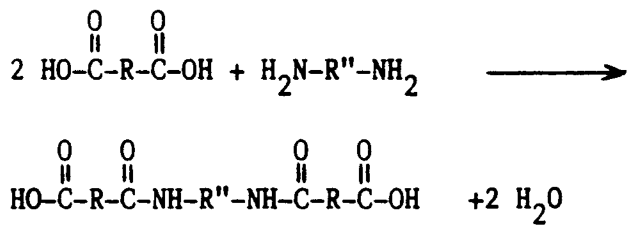

Die so gebildeten Polycarbonsäurealkanolamide oder Polyamidopolycarbonsäurealkanolamide können nach bekannten Verfahren mit Ethylenoxid oder Propylenoxid unter Druck, gegebenenfalls unter Verwendung der üblichen Katalysatoren wie zum Beispiel Alkalihydroxid, Alkalialkoholat oder Bortrifluoridätherat z. B. bei Temperaturen von 130° C bis 200° C zu den entsprechenden Alkoxilaten umgesetzt werden. Diese Verfahren werden beschrieben in: Nikolaus Schönfeld, Grenzflächenaktive Äthylenoxidaddukte, Wissenschaftliche Verlagsgesellschaft mbH, Stuttgart 1976. Auf weitere Literatur wird dort verwiesen. Die Reaktion läuft beispielhaft nach folgendem Schema ab:

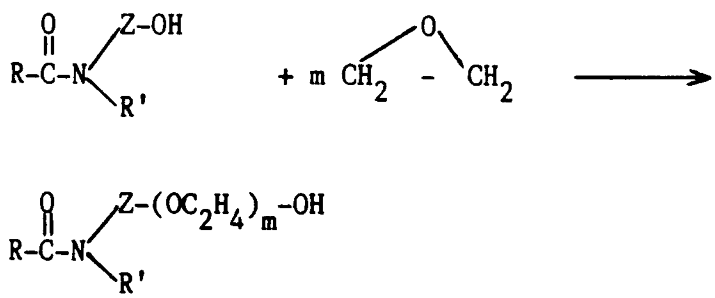

Glycidol (2,3-Epoxy-1-propanol) kann nach für die Umsetzung mit Alkoholen unter Ringöffnung üblichen Verfahren mit den erfindungsgemäßen Polycarbonsäurealkanolamiden oder Polyamidopolycarbonsäurealkanolamiden zu den entsprechenden Glycerin- oder Polyglycerinäthern umgesetzt werden. Diese Verfahren werden beispielsweise beschrieben von: J. Biggs, N.B. Chapman u. V. Wray i. J. Chem. Soc. (B) 1971,66. Die Umsetzung gehorcht beispielhaft folgendem Reaktionsablauf:

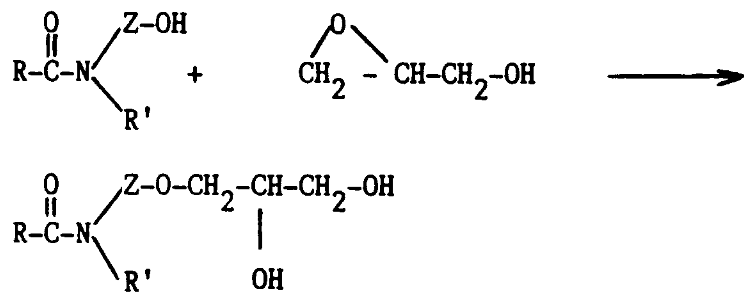

Die Umsetzung der Polycarbonsäurealkanolamide oder der Polyamidopolycarbonsäurealkanolamide mit Lactonen unter Esterbildung wird analog den in US-A-4360643 beschriebenen Verfahren durchgeführt. Die Reaktion des Lactons erfolgt mit den OH-Gruppen des Polycarbonsäurealkanolamids oder des Polyamidocarbonsäurealkanolamids unter Ringöffnung und Esterbildung z. B. bei 100° C bis 180° C entweder in geeigneten Lösungsmitteln wie hochsiedenden Benzinfraktionen, Alkylbenzolen, Estern oder Ketonen oder direkt in der Schmelze und wird durch beispielsweise p-Toluolsulfonsäure oder Dibutylzinndilaurat katalysiert.

Der Reaktionsverlauf ist beispielhaft folgender:

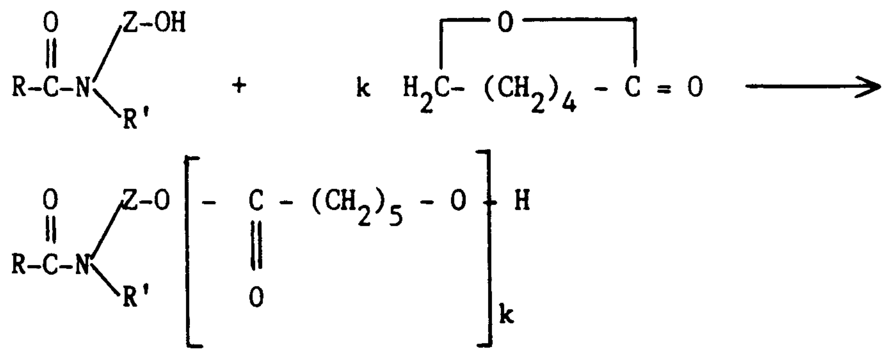

In manchen Fällen, besonders wenn Lösungsmittel störend sind, empfiehlt es sich, diese Lösungsmittel zusammen mit den überschüssigen Reaktionskomponenten abzudestillieren und die Endprodukte in dieser Form einzusetzen. Eine bevorzugte Form der Anwendung ist es, diese Endprodukte in einem für den späteren Verwendungszweck geeigneten Lösungsmittel anzulösen, wenn die thixotrope Zubereitung ein ungesättigtes Polyesterharz enthält, wird man z. B. zweckmäßigerweise das entstandene Reaktionsprodukt der Formel I in Styrol anlösen, um in das System keine störenden Lösungsmittel einzubringen.

In einem hochfestkörperhaltigen Lacksystem (High-solid-system) wird man zweckmäßigerweise die Verbindungen der Formel I möglichst in 100%iger Form oder aber in dem system angepaßten Lösemitteln wie z. B. Estern oder Ketonen anlösen.

Die Verbindungen der Formel I können bevorzugt dem System direkt zugegeben werden. Dann kann das Siliciumdioxid zugesetzt und homogenisiert werden durch Einsatz entsprechender Dispergiergeräte. Umgekehrt können genauso bevorzugt die Verbindungen der Formel I nach dem Dispergierprozess zugesetzt werden, ohne daß merkliche Unterschiede im thixotropen Verhalten sichtbar werden. Bei manchen Anwendungen kann es sinnvoll sein, die erzielte Thixotropie durch nachträglichen Zusatz der Mittel korrigierend einzustellen, so daß auch beide Formen der Anwendung nacheinander zur Anwendung kommen können. In einigen Fällen empfiehlt es sich, das $SiO_2$ als höher konzentrierte Stammpaste unter entsprechendem Zusatz der Mittel mit geeigneten Dispergiermaschinen herzustellen und anschließend dem zu thixotropierenden system zuzusetzen.

Die Verbindungen der Formel I können auch direkt auf das hochdisperse $SiO_2$ aufgebracht werden, mittels geeigneter Verfahren, wie z. B. in Trockenmischern, durch Aufsprühen oder durch Behandlung in wässriger oder organischer Lösung und anschließender Trocknung der so behandelten Feststoffe.

Gegenstand der Erfindung ist deshalb auch ein hochdisperses Siliciumdioxid, das dadurch gekennzeichnet ist, daß es mit Verbindungen der obigen Formel I beschichtet ist.

Die Menge der Beschichtung mit den Verbindungen der Formel I richtet sich nach dem jeweiligen Verwendungszweck des so beschichteten hochdispersen Siliciumdioxids und kann entsprechend angepaßt werden. Zweckmäßig ist das hochdisperse $SiO_2$ mindestens mit 1 Gew.% bezogen auf das Gewicht des Siliciumdioxids, mit der Verbindung der Formel I beschichtet. Bevorzugt liegt die untere Grenze bei etwa 3 Gew.% und besonders bevorzugt bei etwa 5 Gew.%. Der obere Grenzwert für die Menge der Beshichtung hängt naturgemäß ab von dem Aufnahmevermögen des hochdispersen Siliciumdioxids für die Verbindung der Formel I. Die obere Grenze der Beschichtung liegt zweckmäßig bei etwa 100 Gew.% bezogen auf das Gewicht des Siliciumdioxids, vorzugsweise bei etwa 40 Gew.% und besonders bevorzugt bei etwa 20 Gew.%. Größere Mengen sind auch aus wirtschaftlichen Gründen nicht sinnvoll, da durch weitere Erhöhung der Menge eine nennenswerte Wirkungsverbesserung nicht erzielt wird.

Gegenstand der Erfindung ist weiterhin die Verwendung der Verbindungen der Formel I zum Thixotropieren von flüssigen Zubereitungen.

Zubereitungen sind erfindungsgemäß z.B.: Formmassen, Laminierharze, Lacke, Klebstoffe, Dichtungsmassen, Fugenverguß- und Spachtelmassen, Plastisole, Druckfarben und Mineralöle. Unter Formmassen werden Massen verstanden, die zu Formkörpern verarbeitet werden, wobei die in den Massen enthaltenen Reaktionsharze in der Regel bei erhöhter Temperatur während der Formgebung zur Reaktion gebracht werden. Formmassen im Sinne der Erfindung sind z. B. solche auf Basis von ungesättigten Polyesterharzen und Vinylharzen, auch in Kombination mit Thermoplasten wie Polystyrol, Polyvinylacetat, Polymethylmethacrylat und Styrol-Butadien-Copolymeren, die als schrumpfreduzierende Anteile den Polyesterharzen zugesetzt werden. Weitere Formmassen sind insbesondere Polyurethane, welche z. B. im Reaktions-Spritzguß-Verfahren eingesetzt werden.

Andere Formmassen können auch auf Basis von Epoxidharzen aufgebaut sein. Diese Epoxidharze werden bevorzugt auf dem Gebiet der Gießmassen und Preßmassen eingesetzt.
Weitere Formmassen, welche z. B. nach dem Naßpreßverfahren, Injektionsverfahren oder Profilziehverfahren verarbeitet werden können, sind die Phenol-Formaldehyd-Kondensationsharze, welche auch unter dem Begriff Phenolharze bekannt sind.
Die Formmassen im allgemeinen können ebenfalls die gemäß dem Stand der Technik üblichen Zusatzstoffe oder sonstige Bestandteile enthalten. Insbesondere können solche Formmassen Füllstoffe und/oder verstärkende Füllstoffe enthalten, wie z. B. Glasfasern, Kohlenstoff-Fasern und Polyamidfasern, Wolastonite, Silikate, anorganische Carbonate, Aluminiumhydroxid, Bariumsulfat und Kaolin.

Lacke sind sowohl herkömmliche Lacke, welche meist aus flüssiger Phase auf ein Substrat aufgetragen werden und unter Ausbildung eines Filmes eine schützende oder funktionelle und/oder dekorative Oberfläche ausbilden als auch solche mit magnetischen Pigmenten, wie sie bei der Herstellung von Datenträgern eingesetzt werden, z. B. $Fe_2O_3$ und $CrO_2$. Als Substrate sollen z. B. Holz, Metalle, Kunststoff-Folien, Kunststoffteile, Papier, Leder und Baustoffe wie z. B. Mauerwerk, Beton und Putze verstanden werden.
Es kann sich um unpigmentierte, pigmentierte und Farbstoffe enthaltende Lacke handeln, die wiederum verschiedene Arten von Bindemitteln enthalten können, wie z. B. ungesättigte oder gesättigte Polyesterharze, Epoxidharze, Polyurethanharze, Acrylat- und Methacrylatharze, Acrylat-Aminoplastharze, Acrylat-Isocyanatharze, Alkyd-Aminoplastharze, Alkydharze und Melamin- und Harnstoffharze. Als Lösungsmittel können diese Lacke organische Lösungsmittel, wie z. B. Ester, Ketone, Aromaten, Aliphaten und Alkohole und/oder Wasser enthalten, wie dies gemäß dem Stand der Technik dem Fachmann bekannt ist. Klebstoffe werden sehr häufig mit $SiO_2$ thixotropiert zur besseren Standfestigkeit an senkrechten Flächen, sowie um das Abtropfen zu verhindern. Geeignete Bindemittel für solche Klebstoffe sind z. B. Epoxidharze, Polychloroprenharze, Polyurethanharze (1 und 2-komponentig) und Polyacrylatharze.
Auf dem Gebiet der Dichtungsmassen und Fugenvergußmassen werden häufig z. B. Acrylharze, Butylkautschuk, Polysulfidkautschuk, Epoxidharze und Polyurethane eingesetzt. Auch bei diesen Systemen wird hochdisperses $SiO_2$ eingesetzt, um eine erhöhte Standfestigkeit und Thixotropie zu erreichen.

Plastisole bestehen im wesentlichen aus verpastbarem PVC-Pulver und gelierenden Weichmachern wie z. B. Dioctylphthalat, Diisodecylphthalat, Dioctyladipat, Dioctylsebacat, Butylbenzylphthalat und Trikresylphosphat. Durch $SiO_2$ wird eine Thixotropie aufgebaut und die Fließgrenze erhöht und somit ein Ablaufen oder ein Durchsacken durch ein textiles Trägergewebe oder anderes Trägermaterial wie z.B. Glasvlies verhindert. Einsatzgebiete sind z.B. Unterbodenschutz von Fahrzeugen, Dichtungsmassen, Kunstleder, Planen, Fußbodenbeläge und Tauchartikel.

In Druckfarben wird ebenfalls zur Erhöhung der Viskosität $SiO_2$ eingesetzt. Diese Anwendung ist einer herkömmlichen Lackanwendung wie oben beschrieben sehr ähnlich, besonders was die Pigmentierung, die Lösungsmittel und Bindemittel betrifft. Auch hierbei werden z.B. Alkohole, Ester, Ketone, Glykoläther, Wasser und Kohlenwasserstoffe als Lösungsmittel eingesetzt. Die Bindemittel werden je nach Verwendungszweck der Druckfarbe ausgewählt, z.B. modifizierte Kollophoniumharze, Resinate und Kohlenwasserstoffharze für Tiefdruckfarben, oder Polyvinylharze, Acrylharze und Polyamidharze für Verpackungsdruckfarben.

Ganz besonders bevorzugt im Sinne der Erfindung ist die Verwendung der erfindungsgemäßen Mittel in Harzen, wie sie unter den Formmassen bereits beschrieben sind, sowie in Harzen, wie sie im folgenden aufgezählt sind bei Laminierharzen und Feinschichten (Gel Coats).

Ganz besonders bevorzugt im Sinne der Erfindung ist die Verwendung der erfindungsgemäßen Mittel in Laminierharzen und Feinschichten (Gel Coats).

Bei Laminierharzen handelt es sich im wesentlichen um Systeme, welche im Prinzip dem unter Formmassen gesagten entsprechen, lediglich die Härtung erfolgt in der Regel bei Umgebungstemperatur. Es handelt sich also um kalthärtende Systeme, im Gegensatz zu den zuvor beschriebenen Formmassen.

Laminierharze sind z. B. solche auf Basis von ungesättigten Polyesterharzen, Vinylharzen und Epoxidharzen.

Diese Laminierharze werden in der Regel verstärkt durch Glasfasern und Kohlenstoff-Fasern und können Füllstoffe wie z. B. ($Al(OH_3)$,$CaCO_3$, $Sb_2O_3$ enthalten, neben anderen für die Verarbeitung notwendigen Hilfsmitteln, wie dem Fachmann bekannt ist. Für die Feinschichten (Gel-Coats) gilt im wesentlichen das unter Laminierharze gesagte, wobei wesentliche Unterschiede darin bestehen, daß an die Beständigkeit der Feinschichtharze im Normalfall höhere Anforderungen gestellt werden, besonders was die Wasser- und Witterungsbeständigkeit angeht. Außerdem können diese Feinschichtharze farbgebende Pigmente enthalten, üblicherweise aber keine Verstärkungsstoffe. Diese Feinschichtharze sind im allgemeinen stärker als Laminierharze thixotropiert.

Eine Thixotropierung ist bei diesen Systemen von besonderer Bedeutung, weil einerseits eine gute Penetration der flüssigen Harze in den Schichtaufbau der verstärkenden Fasern erreicht werden soll, andererseits nach einer gewissen Relaxationszeit das Ablaufen des Harzes verhindert werden soll. Beim Feinschichtaufbau ist ein guter Verlauf trotz hoher $SiO_2$ Anteile notwendig. Dies wird erreicht durch eine ausgeprägte Thixotropie, wie sie erfindungsgemäß im besonderen Maße erreicht wird.

In Abhängigkeit vom gegebenen System können über die zugesetzten Mengen der Verbindungen der Formel I die gewünschten Thixotropieeffekte applikationsgerecht eingestellt werden, d.h., wie dem Fachmann bekannt ist, ist für unterschiedliche Applikationsverfahren wie zum Beispiel Laminieren, Spritzen oder Wickeln unterschiedliches rheologisches Verhalten notwendig.

Um in den obengenannten Systemen den gewünschten Thixotropiereffekt zu erreichen, werden mindestens etwa 1 Gew.%, vorzugsweise mindestens etwa 3 Gew.% und besonders bevorzugt mindestens etwa 5 Gew.% der Verbindungen der Formel I, bezogen auf das Gewicht des Siliciumdioxid, eingesetzt.

Die obere Grenze liegt zweckmäßig bei etwa 100 Gew.%, vorzugsweise bei etwa 40 Gew.% und besonders bevorzugt bei etwa 20 Gew.%. Größere Mengen sind auch aus wirtschaftlichen Gründen nicht sinnvoll, da durch weitere Erhöhung der Menge eine nennenswerte Wirkungsverbesserung nicht erzielt wird.

In den nachfolgenden Herstellungsbeispielen 1 bis 16 wird die Herstellung der erfindungsgemäß verwendeten Mittel erläutert.

Die Tabelle 1 auf Seite 19 enthält die reaktionsbeschreibenden Daten der Beispiele 6 bis 12. Bei diesen Beispielen wurde die Synthese analog zu den Beispielen 1 bis 3 durchgeführt. In der Tabelle ist jeweils darauf hingewiesen, nach welchem der Beispiele 1 bis 3 vorgegangen wurde ("analog Beisp.").

Die Aminzahlen (AZ, Dimension mgKOH/g) werden nach DIN 53 176 bestimmt. Die Säurezahlen (SZ, Dimension mgKOH/g) werden nach DIN 53 402 bestimmt. Die Messung der Verseifungszahl (VZ, Dimension mgKOH/g) erfolgt nach DIN 53 401. Das beim Auskreisen anfallende Reaktionswasser wird abgetrennt und gewogen. Die Amidbildung in % wird errechnet aus den Säure- und Aminzahlen vor und nach der Reaktion. Das Epoxid-Äquivalentgewicht wird nach DIN 53 188, der Festkörper nach ASTM 1644 D bestimmt. Die Hydroxylzahl (OHZ, Dimension mg/KOH/g) wird nach DIN 53 240 gemessen.

Herstellungsbeispiel 1: Herstellung durch Amidierung einer Carbonsäure

470 g einer technischen Azelainsäure mit einer Säurezahl von 596 mgKOH/g und 525 g Diethanolamin mit einer Aminzahl von 530 mgKOH/g in 300 g Xylol wurden nach bekannter Methode unter azeotroper Entfernung des gebildeten Reaktionswassers umgesetzt. Hierzu wurde das Gemisch in einem Reaktionsgefäß mit Rührer und Wasserabscheider soweit erhitzt, daß am Wasserabscheider ein Rückfluß entstand. Die hierzu notwendige Temperatur lag bei ca. 145° C. Die Reaktion wurde so lange fortgeführt, bis kein weiteres Wasser abgeschieden wurde. Es wurden ca. 90 g Wasser erhalten (100 % der Theorie bezogen auf Ausgangssäurezahl). Da durch Nebenreaktion des hydro-xylfunktionellen Amins ebenfalls $H_2O$ entsteht, können die Wasser-ausbeuten auch über 100 % liegen. Nach dem Abziehen des Lösungsmittels wurde ein

viskoses Produkt mit einer Restsäureszahl von 0,7 mgKOH/g und einer Aminzahl von 101 mgKOH/g erhalten. Demzufolge wurden 67% der Carboxylgruppen unter Amidierung umgesetzt. Das Produkt wird in Cyclohexanon 50%-ig angelöst.

Herstellungsbeispiel 2: Herstellung durch Amidierung eines Carbonsäureesters

105 g Diethanolamin mit einer Aminzahl von 530 mgKOH/g wurden in einem Reaktionsgefäß mit Rührer und Wasserabscheider auf 80° C erwärmt und bei dieser Temperatur 97,1 g Dimethylterephthalat mit einer Verseifungszahl von 577 mgKOH/g zugegeben. Die Temperatur wurde auf 125° C erhöht. Das freiwerdende Methanol wurde am Wasserabscheider aufgefangen. Nach 8 h wurde kein Methanol mehr abgeschieden, es wurden 21 g Methanol erhalten. Dies entspricht 66 der Theorie bezogen auf Verseifungszahl. Die Aminzahl betrug am Ende der Reaktion 138 mgKOH/g. Dies entspricht einer Amidierung von 58%. Das erhaltene hochviskose Produkt wird 50%ig in Isobutanol angelöst.

Herstellungsbeispiel 3: Herstellung durch Amidierung einers Dicarbonsäureanhydrids

50 g Bernsteinsäureanhydrid mit einer Anhydridsäurezahl von 557,5 mgKOH/g wurden in einem Reaktionsgefäß mit Rührer, Wasserabscheider und Tropftrichter bei 90° C in 122 g Xylol gelöst. Bei dieser Temperatur wurden 133 g Diisopropanolamin mit einer Aminzahl von 421,2 mgKOH/g innerhalb einer halben Stunde zugetropft. Anschließend wurde das Reaktionsgemisch soweit erhitzt, bis am Wasserabscheider ein Rückfluß entstand. Es wurden 11,5 g Wasser, dies entspricht 128 % der Theorie, aufgefangen. Aus dem entstandenen Reaktionsgemisch wurde das Xylol abdestilliert. Das Produkt wies eine Restsäurezahl von 1 mgKOH/g auf und eine Aminzahl von 141 mgKOH/g. Dies entspricht einer Amidierung von ca. 55 %. Die Reaktionszeit betrug 7 Stunden. Das Produkt wird 50%ig in Cyclohexanon angelöst.

Herstellungsbeispiel 4: Herstellung einer Säurekomponente durch Umsetzung einer Dicarbonsäure mit einem Diamin.

300 g dimerisierte Fettsäure mit einer Säurezahl von 193 mgKOH/g und 32,6 Hexamethylendiamin mit einer Aminzahl von 890 mgKOH/g wurden in 166 g Xylol in einem Reaktionsgefäß mit Rührer und Wasserabscheider unter Amidbildung eingesetzt. Das Gemisch wurde erhitzt bis sich am Wasserabscheider ein Rückfluß einstellte. Das innerhalb von 4 Std. aufgefangene Reaktionswasser betrug 9,2 g. Dies entspricht 99 % der Theorie bezogen auf Ausgangsaminzahl. Das Produkt, welches anschließend weiter umgesetzt wurde, hatte eine Säurezahl von 60 mgKOH/g. Die Weiterverarbeitung ist in Beispiel 11 beschrieben.

Herstellungsbeispiel 5: wie in Beispiel 4 beschrieben, wurden miteinander umgesetzt:

150 g dimerisierte Fettsäure, Säurezahl 193 mgKOH/g, 9,6 g Diaminopropan, Aminzahl 1516 mgKOH/g in 55 g Xylol. Es wurden innerhalb von 4 Std. 4,8 g Wasser abgeschieden. Dies sind 103 % der Theorie bezogen auf die Aminzahl. Die Säurezahl betrug 70 mgKOH/g. Die Weiterverarbeitung des Produktes ist in Beispiel 12 beschrieben.

Tabelle 1

| Herstellungs-Beisp. | Ausgangs-Komponenten | SZ/AZ/VZ mgKOH/g | Rezeptur (g) | analog Beisp. | $H_2O$-Ausbeute % d.Theorie | Reakt.-zeit | SZ nach Reaktion | AZ nach Reaktion | % Amid bildung | Anlösung 50%-ig in |
|---|---|---|---|---|---|---|---|---|---|---|
| 6 | aliphatische Dicarbonsäure (C4-C6)<br>Diethanolamin<br>Xylol | SZ 830<br>AZ 530 | 338<br>525<br>300 | B1 | 109 % | 5 h | 25 | 133 | 63 % | Cyclohexanon |
| 7 | aliphatische Dicarbonsäure (C4-C6)<br>Diisopropanolamin<br>Xylol | SZ 830<br>AZ 432 | 250<br>485<br>315 | B1 | 101 % | 4 h | 4 | 111 | 65 % | Cyclohexanon |
| 8 | Dimerisierte Fettsäure<br>Diethanolamin<br>Xylol | SZ 193<br>AZ 530 | 428<br>155<br>170 | B1 | 105 % | 4 h | 1 | 44 | 67 % | Cyclohexanon |
| 9 | Trimerisierte Fettsäure<br>Diethanolamin<br>Xylol | SZ 193<br>AZ 530 | 146<br>79<br>60 | B1 | 111 % | 3 h | 13 | 91 | 73 % | Cyclohexanon |
| 10 | Dimethyladipat<br>Diethanolamin | VZ 645<br>AZ 530 | 73<br>105 | B2 | Methanol 66 % | 7,5 h | - | 113 | 70 % | Isobutanol |
| 11 | Säurekomponente aus Beispiel 4 (in Xylol)<br>Diethanolamin | SZ 60<br>AZ 530 | 499<br>52 | B1 | 101 % | 4 h | 5 | 36 | 76 % | Cyclohexanon |
| 12 | Säurekomponente aus Beispiel 5 (in Xylol)<br>Diethanolamin | SZ 70<br>AZ 530 | 150<br>27,2 | B1 | 131 % | 4 h | 19 | 51 | 69 % | Cyclohexanon |

Herstellungsbeispiel 13: Amidierung von Polyglykoldisäure mit Diethanolamin

500 g Polyglykoldisäure der allgemeinen Formel $HOOCCH_2-(OCH_2CH_2)_n-O-CH_2COOH$, (n = 10 bis 12) mit einer Säurezahl von 173,7 mgKOH/g wurden in 284 g Xylol mit 163 g Diethanolamin mit einer Aminzahl

von 530 mgKOH/g in einem Reaktionsgefäß mit Rührer und Wasserabscheider unter Amidierungsbedingungen umgesetzt. Hierzu wurde das Reaktionsgemisch auf 145° C erwärmt, bei dieser Temperatur begann der Rückfluß am Wasserabscheider. Das entstehende Reaktionswasser wurde mit dem Xylol azeotrop abgeschieden. Die Reaktion wurde nach 4 Stunden beendet. Es wurden 27,3 g Wasser (98 % der Theorie bezogen auf Ausgangssäurezahl) aufgefangen. Aus dem entstandenen 2-phasigen Gemisch, bestehend aus Reaktionsprodukt und Xylol, wurde das Xylol unter Vakuum abgezogen. Es wurde ein gelbes, viskoses und leicht trübes Endprodukt erhalten mit einer Säurezahl kleiner 1 mgKOH/g und einer Aminzahl von 17 mgKOH/g. Somit wurden 87 % der Carboxylgruppen unter Amidbildung umgesetzt. Das Produkt wurde 50 %-ig in Isobutanol angelöst.

Herstellungsbeispiel 14: Anlagerung von ε-Caprolacton an die OH-Gruppen der Verbindung aus Beispiel 8 unter ringöffnender Veresterung.

224,8 g des lösungsmittelfreien Reaktionsproduktes aus Herstellungsbeispiel 8 wurden mit 276 g ε-Caprolacton mit einer Verseifungszahl von 152 mgKOH/g in Gegenwart von 1 g Dibutylzindilaurat als Katalysator in einem Reaktionsgefäß mit Rührer und Rückflußkühler umgesetzt. Hierzu wurde die Reaktionsmischung bei einer Temperatur von 160° C gerührt. Die Anlagerung des ε-Caprolactons wurde durch die Bestimmung des Festkörpers kontrolliert. Die Reaktion wurde beendet, als nach 8 Stunden die nichtflüchtigen Anteil über 99,9 % lagen, d.h., praktisch kein freies ε-Caprolacton mehr vorhanden war. Das entstandene Endprodukt, eine braune, hochviskose Flüssigkeit, wies eine Aminzahl von 20,8 mgKOH/g und eine Hydroxylzahl von 95 mgKOH/g auf. Das Produkt wurde 50 %-ig in Xylol angelöst.

Herstellungsbeispiel 15: Öffnung eines Oxiranringes unter Ätherbildung am Beispiel der Reaktion von 2,3-Epoxy-1-propanol mit den OH-Gruppen der Verbindung aus Beispiel 8.

Das Reaktionsgemisch bestehend aus 376 g der lösungsmittelfreien Verbindung aus Herstellungsbeispiel 8, 148 g 2,3-Epoxypropanol mit einem Epoxid-Äquivalentgewicht von 73 und 123,5 g Xylol wurde in einer Apparatur mit Rührer und Rückflußkühler unter Stickstoffatmosphäre und Rührer langsam erwärmt. Bei 110° C setzte eine exotherme Reaktion ein, durch welche die Temperatur auf 148° C stieg. Die Umsetzung wurde bei einer Temperatur von 150° C fortgesetzt und durch die Bestimmung der Zunahme des Epoxid-Äquivalentgewichtes kontrolliert. 5 Stunden nach Einsetzen der exothermen Reaktion wurde die Umsetzung beendet. Das Epoxid-Äquivalentgewicht betrug zu diesem Zeitpunkt 770 000. Dies entspricht einem Epoxidumsatz von über 99 %. Es wurde ein braunes, hochviskoses Produkt erhalten, welches eine Hydroxylzahl von 288 mgKOH/g aufwies. Das Produkt ist mit Xylol verdünnbar.

**Anwendungstechnische Prüfung:**

Prüfmethode:

Zur Ermittlung des thixotropen Verhaltens von Flüssigkeiten wurde ein definiertes Volumen der Flüssigkeit in einem stationären Zylinder durch einen zylindrischen Rotationskörper in einem Ringspalt bewegt. (Rotationsviskosimeter).

Gemessen wurden die Proben bei steigender Schergeschwindigkeit (D↑) in einem definierten Zeitraum ($t_1$) bis auf eine maximale Schergeschwindigkeit (D max.) und im gleichen Zeitraum ($t_1 = t_2$) mit fallender Schergeschwindigkeit (D↓) bis zum Stillstand.

Ermittelt wurde die Schubspannung ($\tau$) in Abhängigkeit der Schergeschwindigkeit.

Die Proben wurden über ein Doppelmantelgefäß temperiert, geringe Abweichungen durch auftretende Erwärmung - verursacht durch den Rotationskörper - wurden vernachlässigt.

Die während der Messung aufgezeigten Fließkurven zeigten eine Aufwärts-und eine Abwärtskurve.

Die Hysteresefläche ($L = \tau . D$), bezogen auf das gescherte Volumen, beschreibt die Leistungsdifferenz zwischen Aufwärts- und Abwärtskurve.

Als weitere Beschreibung des thixotropen Verhaltens wird die aufgewandte Arbeit je Volumeneinheit aus der Leistung abgeleitet.

$$\frac{W}{V} = L \,.\, \text{Scherzeit } (t_1 + t_2)$$

Die in den anwendungstechnischen Beispielen eingesetzten Produkte sind wie folgt zuzuordnen:

A0 ist O - Probe

A1 enthält Produkt aus Herstellungsbeispiel 8
A2 enthält Produkt aus Herstellungsbeispiel 12
A3 enthält Produkt aus Herstellungsbeispiel 9
A4 enthält Produkt aus Herstellungsbeispiel 10
A5 enthält Produkt aus Herstellungsbeispiel 1
A6 enthält Produkt aus Herstellungsbeispiel 6
A7 enthält Produkt aus Herstellungsbeispiel 7

Dem Stand der Technik gemäß wurden als Vergleichsbeispiele folgende Produkte verwendet.

A8 enthält Polyoxyethylen-Sorbitanmonolaurat
A9 enthält Glycerin
A10 enthält Polyäthylenglykol ($\overline{M}_n$~1000)
A11 enthält Citronensäurelösung (50%-ig) + Diethanolamin im Gewichtsverhältnis 2/1,5.(US-A-4,238,387)

Die in den Tabellen 2, 3 und 4 aufgeführten Meßwerte zeigen eine deutliche Verbesserung im thixotropen Verhalten sowie im Absetzverhalten bei den mit Verbindungen der Formel I versetzten Zubereitungen. gegenüber den dem Stand der Technik eingesetzten Produkte gemäß A8, A9 und A10.

## Herstellung der Proben

Die Ansatzgröße je Probe betrug 200 g. Die Produkte laut den aufgeführten Herstellungsbeispielen und die Produkte nach dem Stand der Technik wurden in einer Konzentration von 20% - bezogen auf den Kieselsäureanteil - vor der Zugabe des Kieselsäureanteils in das ungesättigte Polyesterharz beziehungsweise Dioctylphthalat oder Mineralöl eingerührt. Bei der Herstellung der O-Probe wurde auf den Zusatz von Verbindungen der Formel I oder Produkten gemäß dem Stand der Technik, wie unter A8 bis A10 angegeben, verzichtet.

Nach Zugabe der Kieselsäure wurden die Proben dispergiert. Als pyrogene Kieselsäure wurde eine solche mit ca. 200 m$^2$ Oberfläche / g eingesetzt. (Methode BET - DIN 66131), weil diese Kieselsäure im wesentlichen den Stand der Technik betreffend die Thixotropierung von flüssigen Zubereitungen darstellt. Andere Kieselsäuren mit unterschiedlichen Oberflächen oder nach anderen Verfahren hergestellt wurden ebenfalls geprüft und zeigen ähnliche Verhaltensweisen. Für die Dispergierung wurde ein Labordissolver benutzt. Die Dispergierzeit betrug 5 min. bei 4660 U/min.

## Anwendungsbeispiele

### Beispiel 1

Substanz:

Mittelviskoses, hochviskoses Isophthalsäure-Polyesterharz gemäß DIN 16946, Teil 2, Typ 1140
3 % pyrogene Kieselsäure

### Beispiel 2

Substanz:

Niedrigviskoses, mittelreaktives Orthophthalsäure-Polyesterharz gemäß DIN 16946, Teil 2, Typ 1110
2 % pyrogene Kieselsäure

### Beispiel 3

Substanz:

Hochviskoses, mittelreaktives Vinylesterharz gemäß DIN 16946, Teil 2, Typ 1140
3 % pyrogene Kieselsäure

### Beispiel 4

Substanz:

Mittelviskoses, unmodifiziertes Epoxidharz auf Basis von Bisphenol A
2 % pyrogene Kieselsäure

Beispiel 5

Substanz:

Dioctylphthalat
2 % pyrogene Kieselsäure

Beispiel 6

Substanz:

Naphthenbasisches Mineralöl (80 mPas bei 20° C)
1 % pyrogene Kieselsäure

**Meßbedingungen**

| | |
|---|---|
| Meßgerät: | Rotovisko RVIII, Haake |
| Temperatur: | 20° C |
| Programm: | 0 - 90 UPM/90 - 0 UPM |
| | Steigerung: 25 UPM |
| | Meßzeit ($t_1$ + $t_2$) : 7,2 Minuten |

**Tabelle 2** Meßergebnisse 24 Stunden nach der Herstellung

| Beispiel | 1 | | 2 | | 3 | | 4 | | 5 | |
|---|---|---|---|---|---|---|---|---|---|---|
| Probe | L | W/V | L | W/V | L | W/V | L | W/V | L | W/V |
| A0 | 1021 | 7351,5 | 1207 | 8690,4 | 0 | 0 | 3714 | 26740,8 | 185 | 1332,0 |
| A1 | 3900 | 28080,0 | 2878 | 20721,6 | 3807 | 27410,4 | 7500 | 54000,0 | 1114 | 8020,8 |
| A2 | 2135 | 15372,0 | 2135 | 15372,0 | 2135 | 15372,0 | 7429 | 53488,8 | 1114 | 8020,8 |
| A3 | 1857 | 13370,4 | 1671 | 12031,2 | 1764 | 12700,8 | 6407 | 46130,4 | 1067 | 7682,4 |
| A4 | 1857 | 13370,4 | 1578 | 11361,6 | 2135 | 15372,0 | 7420 | 53424,0 | 538 | 3873,6 |
| A5 | 2414 | 17380,8 | 1671 | 12031,2 | 2228 | 16041,6 | 7429 | 53488,8 | 528 | 3805,6 |
| A6 | 2135 | 15372,0 | 1578 | 11361,6 | 1764 | 12700,8 | 6407 | 46130,4 | 510 | 3672,0 |
| A7 | 1671 | 12031,2 | 1300 | 9360,0 | 1300 | 9360,0 | 5571 | 40111,2 | 1392 | 10022,4 |
| A8 | 278 | 2001,6 | 278 | 2001,6 | 928 | 6681,6 | 2785 | 20052,0 | 464 | 3340,8 |
| A9 | 278 | 2001,6 | 650 | 4680,0 | 464 | 3340,8 | 5571 | 40111,2 | 455 | 3276,0 |
| A10 | 185 | 1332,0 | 185 | 1332,0 | 1021 | 7351,2 | 4643 | 33429,6 | 473 | 3405,6 |
| A11 | — | — | — | — | <50 | <50 | — | — | — | — |

L = Leistung ($Pas^{-1}$)

W/V = Arbeit/Volumen ($\frac{Nm}{m^3}$)

**Tabelle 3 Meßergebnisse 48 Stunden nach Herstellung**

| Beispiel | 1 | | 2 | | 3 | |
|---|---|---|---|---|---|---|
| Probe | L | W/V | L | W/V | L | W/V |
| A0 | 1300 | 9360,0 | 1207 | 8690,4 | 0 | 0 |
| A1 | 4086 | 29419,2 | 2878 | 20721,6 | 4178 | 30081,6 |
| A2 | 2321 | 16711,2 | 1950 | 14040,0 | 2228 | 16041,6 |
| A3 | 2135 | 15372,0 | 1578 | 11361,6 | 1857 | 13370,4 |
| A4 | 2045 | 14709,6 | 1392 | 10022,4 | 2321 | 16711,2 |
| A5 | 1671 | 12031,2 | 1485 | 10692,0 | 2693 | 19389,6 |
| A6 | 1950 | 14040,0 | 1392 | 10022,4 | 1857 | 13370,4 |
| A7 | 1671 | 12031,2 | 1578 | 11361,6 | 1300 | 9360,0 |
| A8 | 464 | 3340,2 | 185 | 1332,0 | 1021 | 7351,2 |
| A9 | 278 | 2001,6 | 464 | 3340,8 | 928 | 6681,6 |
| A10 | 371 | 2671,2 | 92 | 662,4 | 1021 | 7351,2 |

L = Leistung ($Pas^{-1}$)

W/V = Arbeit/Volumen ($\frac{Nm}{m^3}$)

Tabelle 4

Absetzverhalten der pyrogenen Kieselsäure in Beispiel 6:

| | 5 h | | 24 h | | 48 h | | 96 h | | 120 h | | 144 h | |
|---|---|---|---|---|---|---|---|---|---|---|---|---|
| | cm | % | cm | % | cm | % | cm | % | cm | % | cm | % |
| A0 | 4,2 | 42 | 6,1 | 61 | 6,5 | 65 | 6,5 | 65 | 6,7 | 67 | 7,1 | 71 |
| A1 | 0 | 0 | 0 | 0 | 0,2 | 2 | 0,5 | 5 | 0,8 | 8 | 1,0 | 10 |
| A2 | 0 | 0 | 0 | 0 | 0,2 | 2 | 0,5 | 5 | 0,9 | 9 | 1,1 | 11 |
| A3 | 0 | 0 | 0 | 0 | 0,2 | 2 | 0,5 | 5 | 0,9 | 9 | 1,4 | 14 |
| A4 | 0 | 0 | 0,3 | 3 | 0,5 | 2 | 0,8 | 8 | 1,1 | 11 | 1,6 | 16 |
| A8 | 0,2 | 2 | 0,6 | 6 | 1,2 | 12 | 2,4 | 24 | 3,4 | 34 | 4,0 | 40 |
| A9 | 3 | 3 | 4,0 | 40 | 4,5 | 45 | 4,8 | 48 | 5,0 | 50 | 5,1 | 51 |
| A10 | 0,2 | 2 | 0,5 | 5 | 0,9 | 9 | 2,0 | 20 | 3,0 | 30 | 3,3 | 33 |

Die cm und %-Angaben beziehen sich auf den im Lagerbehälter gemessenen klaren Flüssigkeitsüberstand.

## Patentansprüche

**1.** Thixotrope Zubereitungen mit einem Gehalt an hochdispersem Siliciumdioxid, dadurch gekennzeichnet, daß sie hydroxyfunktionelle Polycarbonsäureamide folgender Formel I enthalten:

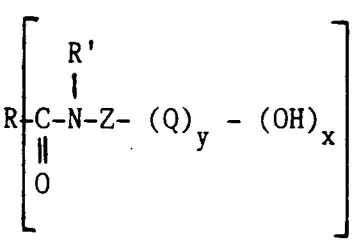

(I)

wobei die Symbole die folgenden Bedeutungen haben:

- R = aliphatische Kohlenwasserstoffgruppen mit 2 bis 60 C-Atomen oder aromatische Kohlenwasserstoffgruppen mit 6 bis 20 C-Atomen oder aliphatische oder aliphatisch/aromatische Kohlenwasserstoffreste mit 6 bis 150 C-Atomen, die durch 2,4,6 oder 8 Carbonamidgruppen unterbrochen sind, oder aliphatische Kohlenwasserstoffreste mit 4 bis 150 C-Atomen, die durch 2 bis 75 -O-(Sauerstoff) Gruppen unterbrochen sind
- R' = H, oder $C_1$ bis $C_4$ Alkyl, oder $-Z'-(Q)_y-(OH)_x$
- x = 1 bis 3
- y = 0 oder 1
- Z = Alkylenrest mit 2 bis 6 C-atomen
- Z' = Alkylenrest, welcher gleich oder ungleich Z ist, mit 2 bis 6 C-Atomen
- Q = aliphatischer Kohlenwasserstoffrest mit 2 bis 200 C-Atomen, welcher über

-O- oder 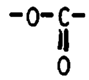

mit Z oder Z' verbunden ist und durch null bis 99 Sauerstoffatome und/oder Carbonsäureestergruppen unterbrochen ist
n = 2 bis 3.

**2.** Zubereitungen nach Anspruch 1, dadurch gekennzeichnet, daß Q ein aliphatischer Kohlenwasserstoff ist mit 2 bis 80 C-Atomen, welcher über

$-O-$ oder 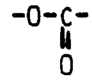

mit Z oder Z′ verbunden ist.
und durch null bis 39 Sauerstoffatome und/oder Carbonsäureestergruppen unterbrochen ist.

**3.** Zubereitungen nach Anspruch 1 oder 2, dadurch gekennzeichnet, daß R für eine aliphatische Kohlenwasserstoffgruppe mit 6 bis 44 C-Atomen steht.

**4.** Zubereitungen nach einem oder mehreren der Ansprüche 1 bis 3, dadurch gekennzeichnet, daß R für eine aliphatische Kohlenwasserstoffgruppe mit 34 bis 42 C-Atomen steht.

**5.** Zubereitungen nach einem oder mehreren der Ansprüche 1 bis 4, dadurch gekennzeichnet, daß R den Kohlenwasserstoffrest von Dimerfettsäuren darstellt.

**6.** Zubereitungen nach Anspruch 1 oder 2, dadurch gekennzeichnet, daß R für einen aliphatischen Kohlenwasserstoffrest mit 6 bis 26 C-Atomen steht, der durch 3 bis 13 Sauerstoffatome unterbrochen ist.

**7.** Zubereitungen nach Anspruch 1 oder 2, dadurch gekennzeichnet, daß R für einen aliphatischen Kohlenwasserstoffrest mit 70 bis 90 C-Atomen steht, der durch zwei Carbonamid-Gruppen unterbrochen ist.

**8.** Zubereitungen nach einem oder mehreren der Ansprüche 1 bis 7, dadurch gekennzeichnet, daß R′ für $-Z-(Q)_y-(OH)_x$ steht, worin x und y obige Bedeutungen haben.

**9.** Zubereitungen nach einem oder mehreren der Ansprüche 1 bis 8, dadurch gekennzeichnet, daß sie Siliciumdioxid und hydroxyfunktionelle Polycarbonsäureamide nach Anspruch 1 bis 8 in Mengen von mindestens 1 Gew.%, bezogen auf Siliciumdioxid, enthalten.

**10.** Zubereitungen nach einem oder mehreren der Ansprüche 1 bis 8, dadurch gekennzeichnet, daß sie hydroxyfunktionelle Polycarbonsäureamide in Mengen von mindestens 3 Gew.%, bezogen auf Siliciumdioxid, enthalten.

**11.** Zubereitungen nach einem oder mehreren der Ansprüche 1 bis 8, dadurch gekennzeichnet, daß sie hydroxyfunktionelle Polycarbonsäureamide in Mengen von mindestens 5 Gew.%, bezogen auf Siliciumdioxid, enthalten.

**12.** Verwendung der Verbindungen der Formel I gemäß einem oder mehreren der Ansprüche 1 bis 8 zum Thixotropieren von flüssigen Zubereitungen.

**13.** Hochdisperses Siliciumdioxid, dadurch gekennzeichnet, daß es mit Verbindungen der Formel I beschichtet ist:

$$R\left[\underset{\overset{\|}{O}}{C}-\overset{\overset{R'}{|}}{N}-Z-(Q)_y-(OH)_x\right]_n \qquad (I)$$

wobei die Symbole die folgenden Bedeutungen haben:

R = aliphatische Kohlenwasserstoffgruppen mit 2 bis 60 C-Atomen oder aromatische Kohlenwasserstoffgruppen mit 6 bis 20 C-Atomen oder aliphatische oder aliphatisch/aromatische Kohlenwasserstoffreste mit 6 bis 150 C-Atomen, die durch 2,4,6 oder 8 Carbonamidgruppen unterbrochen sind, oder aliphatische Kohlenwasserstoffreste mit 4 bis 150 C-Atomen, die durch 2 bis 75 -O-(Sauerstoff) Gruppen unterbrochen sind

R′ = H, oder $C_1$ bis $C_4$ Alkyl, oder $-Z'-(Q)_y-(OH)_x$

x = 1 bis 3

y = 0 oder 1

Z = Alkylenrest mit 2 bis 6 C-Atomen

Z′ = Alkylenrest, welcher gleich oder ungleich Z ist, mit 2 bis 6 C-Atomen

Q = aliphatischer Kohlenwasserstoffrest mit 2 bis 200 C-Atomen, welche über

$$-O- \text{ oder } -O-\underset{\overset{\|}{O}}{C}-$$

mit Z oder Z′ verbunden ist und durch null bis 99 Sauerstoffatome und/oder Carbonsäureestergruppen unterbrochen ist.

n = 2 bis 3.

**14.** Hochdisperses Siliciumdioxid nach Anspruch 13, dadurch gekennzeichnet, daß Q ein aliphatischer Kohlenwasserstoffrest ist mit 2 bis 80 C-Atomen, welcher über

$$-O- \text{ oder } -O-\underset{\overset{\|}{O}}{C}-$$

mit Z oder Z′ verbunden ist und durch null bis 39 Sauerstoffatome und/oder Carbonsäureestergruppen unterbrochen ist.

**15.** Hochdisperses Siliciumdioxid nach Anspruch 13 oder 14, dadurch gekennzeichnet, daß R für eine aliphatische Kohlenwasserstoffgruppe mit 6 bis 44 C-Atomen steht.

**16.** Hochdisperses Siliciumdioxid nach einem oder mehreren der Ansprüche 13 bis 15, dadurch gekennzeichnet, daß R für eine aliphatische Kohlenwasserstoffgruppe mit 34 bis 42 C-Atomen steht.

**17.** Hochdisperses Siliciumdioxid nach einem oder mehreren der Ansprüche 13 bis 16, dadurch gekennzeichnet, daß R den Kohlenwasserstoffrest von Dimerfettsäuren darstellt.

**18.** Hochdisperses Siliciumdioxid nach Anspruch 13 oder 14, dadurch gekennzeichnet, daß R für einen aliphatischen Kohlenwasserstoffrest mit 6 bis 26 C-Atomen steht, der durch 3 bis 13 Sauerstoffatome unterbrochen ist.

**19.** Hochdisperses Siliciumdioxid nach Anspruch 13 oder 14, dadurch gekennzeichnet, daß R für einen aliphatischen Kohlenwasserstoffrest mit 70 bis 90 C-Atomen steht, der durch zwei Carbonamid-Gruppen unterbrochen ist.

**20.** Hochdisperses Siliciumdioxid nach einem oder mehreren der Ansprüche 13 bis 19, dadurch gekennzeichnet, daß R′ für -Z-$(Q)_y$-$(OH)_x$ steht, worin x und y obige Bedeutungen haben.

**21.** Hochdisperses Siliciumdioxid nach einem oder mehreren der Ansprüche 13 bis 20, dadurch gekennzeichnet, daß es mit mindestens 1 Gew.% der Verbindungen der Formel I beschichtet ist.

**22.** Hochdisperses Siliciumdioxid nach einem oder mehreren der Ansprüche 13 bis 20, dadurch gekennzeichnet, daß es mit mindestens 3 Gew.% der Verbindungen der Formel I beschichtet ist.

**23.** Hochdisperses Siliciumdioxid nach einem oder mehreren der Ansprüche 13 bis 20, dadurch gekennzeichnet, daß es mit mindestens 5 Gew.% der Verbindungen der Formel I beschichtet ist.

**24.** Verwendung des hochdispersen Siliciumdioxids nach einem oder mehreren der Ansprüche 13 bis 23 zur Thixotropierung von flüssigen Zubereitungen.

**Claims**

**1.** Thixotropic preparations with a content of highly dispersed silicon dioxide, characterised in that they contain polycarboxylic acid amides comprising hydroxy groups and having the following formula I:

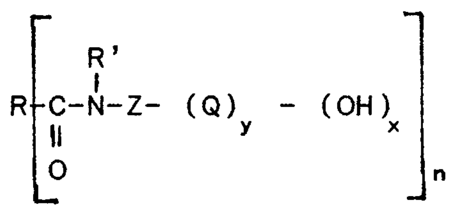

(I)

in which the symbols have the following meanings:
R denotes aliphatic hydrocarbon groups with 2 to 60 C atoms or aromatic hydrocarbon groups with 6 to 20 C atoms or aliphatic or aliphatic/aromatic hydrocarbon radicals with 6 to 150 C atoms interrupted by 2, 4, 6 or 8 carboxylic amide groups, or aliphatic hydrocarbon radicals with 4 to 150 carbon atoms interrupted by 2 to 75 O (oxygen) groups,
R' = H, or $C_1$ to $C_4$ alkyl or -Z'-$(Q)_y$-$(OH)_x$
x = 1 to 3,
y = 0 or 1
Z = an alkylene radical with 2 to 6 carbon atoms
Z' = an alkylene radical which is the same as or different from Z and has 2 to 6 C atoms
Q = an aliphatic hydrocarbon radical with 2 to 200 C atoms and combined with Z or Z' via

-O- or 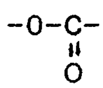

and interrupted by zero to 99 oxygen atoms or carboxylic acid ester groups, and
n = 2 to 3.

**2.** Preparations according to claim 1, characterised in that Q is an aliphatic hydrocarbon with 2 to 80 C atoms and combined with Z or Z' via

-O- or 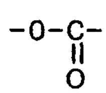,

and interrupted by zero to 39 oxygen atoms and/or carboxylic acid ester groups.

**3.** Preparations according to claim 1 or 2, characterised in that R stands for an aliphatic hydrocarbon

group with 6 to 44 C atoms.

4. Preparations according to one or more of claims 1 to 3, characterised in that R stands for an aliphatic hydrocarbon group with 34 to 42 C atoms.

5. Preparations according to one or more of claims 1 to 4, characterised in that R denotes the hydrocarbon radical of dimeric fatty acids.

6. Preparations according to claim 1 or 2, characterised in that R stands for an aliphatic hydrocarbon radical with 6 to 26 carbon atoms and interrupted by 3 to 13 oxygen atoms.

7. Preparations according to claim 1 or 2, characterised in that R stands for an aliphatic hydrocarbon radical with 70 to 90 C atoms interrupted by two carboxylic amide groups.

8. Preparations according to one or more of claims 1 to 7, characterised in that R' stands for $-Z-(Q)_y-(OH)_x$, where x and y have the meanings given previously.

9. Preparations according to one or more of claims 1 to 8, characterised in that they contain silicon dioxide and polycarboxylic acid amides comprising hydroxy groups as per claims 1 to 8, in quantities of et least 1 wt.% relative to silicon dioxide.

10. Preparations according to one or more of claims 1 to 8, characterised in that they contain polycarboxylic acid amides comprising hydroxy groups and in proportions of at least 3 wt.% relative to silicon dioxide.

11. Preparations according to one or more of claims 1 to 8, characterised in that they contain polycarboxylic acid amides comprising hydroxy groups and in proportions of at least 5 wt.% relative to silicon dioxide.

12. Use of the formula I compounds according to one or more of claims 1 to 8 for making liquid preparations thixotropic.

13. Highly dispersed silicon dioxide characterised in that it is coated with compounds having the formula I:

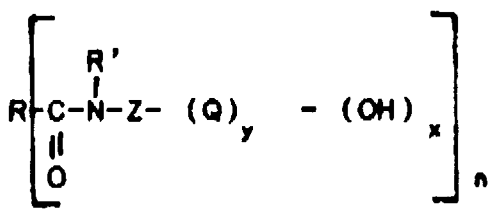

(I)

in which the symbols have the following meanings:
R denotes aliphatic hydrocarbon groups with 2 to 60 C atoms or aromatic hydrocarbon groups with 6 to 20 C atoms or aliphatic or aliphatic/aromatic hydrocarbon radicals with 6 to 150 C atoms interrupted by 2, 4, 6 or 8 carboxylic amide groups, or aliphatic hydrocarbon radicals with 4 to 150 carbon atoms interrupted by 2 to 75 O (oxygen) groups,
R' = H, or $C_1$ to $C_4$ alkyl, or $-Z'-(Q)_y-(OH)_x$
x = 1 to 3,
y = 0 or 1
Z = an alkylene radical with 2 to 6 carbon atoms
Z' = an alkylene radical which is the same as or different from Z and has 2 to 6 C atoms
Q = an aliphatic hydrocarbon radical with 2 to 200 C atoms and combined with Z or Z' via

-O- or 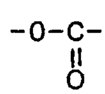

and interrupted by zero to 99 oxygen atoms or carboxylic acid ester groups, and n = 2 to 3.

**14.** Highly dispersed silicon dioxide according to claim 13, characterised in that Q is an aliphatic hydrocarbon radical with 2 to 80 C atoms and combined with Z or Z' via

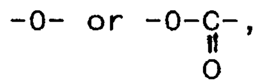

interrupted by zero to 39 oxygen atoms and/or carboxylic acid ester groups.

**15.** Highly dispersed silicon dioxide according to claim 13 or 14, characterised in that R stands for an aliphatic hydrocarbon group with 6 to 44 C atoms.

**16.** Highly dispersed silicon dioxide according to one or more of claims 13 to 15, characterised in that R stands for an aliphatic hydrocarbon group with 34 to 42 C atoms.

**17.** Highly dispersed silicon dioxide according to one or more of claims 13 to 16, characterised in that R denotes the hydrocarbon radical of dimeric fatty acids.

**18.** Highly dispersed silicon dioxide according to claim 13 or 14, characterised in that R stands for an aliphatic hydrocarbon radical with 6 to 26 carbon atoms and interrupted by 3 to 13 oxygen atoms.

**19.** Highly dispersed silicon dioxide according to claim 13 or 14, characterised in that R stands for an aliphatic hydrocarbon radical with 70 to 90 C atoms interrupted by two carboxylic amide groups.

**20.** Highly dispersed silicon dioxide according to one or more of claims 13 to 19, characterised in that R' stands for $-Z-(Q)_y-(OH)_x$, where x and y have the meanings given previously.

**21.** Highly dispersed silicon dioxide according to one or more of claims 13 to 20, characterised in that it is coated with at least 1 wt.% of formula I compounds.

**22.** Highly dispersed silicon dioxide according to one or more of claims 13 to 20, characterised in that it is coated with at least 3 wt.% of formula I compounds.

**23.** Highly dispersed silicon dioxide according to one or more of claims 13 to 20, characterised in that it is coated with at least 5 wt.% of formula I compounds.

**24.** Use of the highly dispersed silicon dioxide according to one or more of claims 13 to 23 for making liquid preparations thixotropic.

**Revendications**

**1.** Préparations thixotropes contenant du dioxyde de silicium fortement dispersé, caractérisées en ce qu'elles contiennent des amides d'amides d'acides polycarboxyliques à fonction hydroxy de formule I ci-dessous:

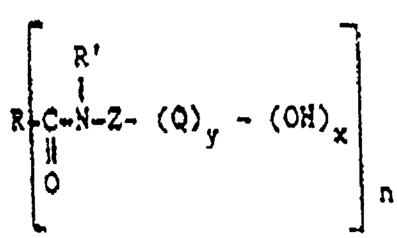

(I)

dans laquelle les symboles ont les significations suivantes:

R = groupes hydrocarbonés aliphatiques en $C_2$ à $C_{60}$ ou groupes hydrocarbonés aromatiques en $C_6$ à $C_{20}$ ou radicaux hydrocarbonés aliphatiques ou aliphatiques/aromatiques en $C_6$ à $C_{50}$ , qui sont interrompus par 2, 4, 6 ou 8 groupes carbonamide, ou radicaux hydrocarbonés aliphatiques en $C_4$ à $C_{150}$, qui sont interrompus par de 2 à 75 groupes -O- (oxygène)

R' = H, ou alcoyle en $C_1$ à $C_4$ , ou $-Z'-(Q)_y-(OH)_x$

x = 1 à 3

y = 0 ou 1

Z = radical alcoylène en $C_2$ à $C_6$

Z' = radical alcoylène, qui est ou n'est pas identique à Z, en $C_2$ à $C_6$

Q = radical hydrocarboné aliphatique en $C_2$ à $C_{200}$ , qui eat relié à Z ou Z' par l'intermédiaire de

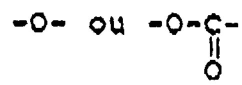

et interrompu par de zéro à 99 atomes d'oxygène et/o groupes ester d'acide carboxylique

n = 2 à 3.

2. Préparations selon la revendication 1, caractérisées en ce que Q représente un hydrocarbure aliphatique en $C_2$ à $C_{80}$ , qui est relié à Z ou Z' par l'intermédiaire de

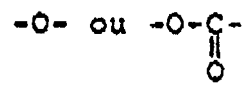

et est interrompu par de zéro à 39 atomes d'oxygène et/ou groupes ester d'acide carboxylique.

3. Préparations selon la revendication 1 ou 2, caractérisées en ce que R représente un groupe hydrocarboné aliphatique en $C_6$ à $C_{44}$.

4. Préparations selon une ou plusieurs des revendications 1 à 3, caractérisées en ce que R représente un groupe hydrocarboné aliphatique en $C_{34}$ à $C_{42}$.

5. Préparations selon une ou plusieurs des revendications 1 à 4, caractérisées en ce que R représente le radical hydrocarboné d'acides gras dimères.

6. Préparations selon la revendication 1 ou 2, caractérisées en ce que R représente un radical hydrocarboné aliphatique en $C_6$ à $C_{26}$ qui est interrompu par de 3 à 13 atomes d'oxygène.

7. Préparations selon la revendication 1 ou 2, caractérisées en ce que R représente un radical hydrocarboné aliphatique en $C_{70}$ à $C_{90}$ qui est interrompu par deux groupes carbonamide.

8. Préparations selon une ou plusieurs des revendications 1 à 7, caractérisées en ce que R' représente $-Z-(Q)_y-(OH)_x$ , où x et y ont les significations données ci-dessus.

9. Préparations selon une ou plusieurs des revendications 1 à 8, caractérisées en ce qu'elles contiennent du dioxyde de silicium et des amides d'acides polycarboxyliques à fonction hydroxy selon les revendications 1 à 8 à des quantités d'au moins 1% en poids, par rapport au dioxyde de silicium.

10. Préparations selon une ou plusieurs des revendications 1 à 8, caractérisées en ce qu'elles contiennent des amides d'acides polycarboxyliques à fonction hydroxy à des quantités d'au moins 3% en poids, par rapport au dioxyde de silicium.

11. Préparations selon une ou plusieurs des revendications 1 à 8, caractérisées en ce qu'elles contiennent des amides d'acides polycarboxyliques à fonction hydroxy à des quantités d'au moins 5% en poids, par rapport au dioxyde de silicium.

**12.** Application des composés de formule I selon une ou plusieurs des revendications 1 à 8 à la thixotropisation des préparations liquides.

**13.** Dioxyde de silicium fortement dispersé, caractérisé en ce qu'il est recouvert de composés de formule I:

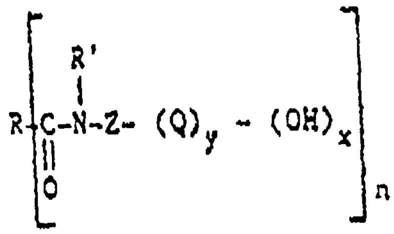

(I)

dans laquelle les symboles ont les significations suivantes:

- R = groupes hydrocarbonés aliphatiques en $C_2$ à $C_{60}$ ou groupes hydrocarbonés aromatiques en $C_6$ à $C_{20}$ ou radicaux hydrocarbonés aliphatiques ou aliphatiques/aromatiques en $C_6$ à $C_{150}$, qui sont interrompus par 2, 4, 6 ou 8 groupes carbonamide, ou radicaux hydrocarbonés aliphatiques en $C_4$ à $C_{150}$ , qui sont interrompus par de 2 à 75 groupes -O- (oxygène)
- R' = H, ou alcoyle en $C_1$ à $C_4$ , ou $-Z'-(Q)_y-(OH)_x$
- x = 1 à 3
- y = 0 ou 1
- Z = radical alcoylène en $C_2$ à $C_6$
- Z' = radical alcoylène qui est ou n'est pas identique à Z, en $C_2$ à $C_6$
- Q = radical hydrocarboné aliphatique en $C_2$ à $C_{200}$ , qui est relié à Z ou Z' par l'intermédiaire de

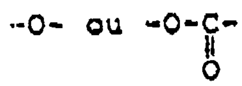

et qui est interrompu par de zéro à 99 atomes d'oxygène et/ou groupes ester d'acide carboxylique
- n = 2 à 3.

**14.** Dioxyde de silicium fortement dispersé selon la revendication 13, caractérisé en ce que Q est un radical hydrocarboné aliphatique en $C_2$ à $C_{80}$ qui est relié à Z ou Z' par l'intermédiaire de

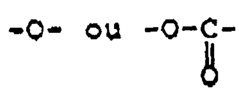

et qui est interrompu par de zéro à 39 atomes d'oxygène et/ou groupes ester d'acide carboxylique.

**15.** Dioxyde de silicium fortement dispersé selon la revendication 13 ou 14, caractérisé en ce que R représente un groupe hydrocarboné aliphatique en $C_6$ à $C_{44}$.

**16.** Dioxyde de silicium fortement dispersé selon une ou plusieurs des revendications 13 à 15, caractérisé en ce que R représente un groupe hydrocarboné aliphatique en $C_{34}$ à $C_{42}$.

**17.** Dioxyde de silicium fortement dispersé selon une ou plusieurs des revendications 13 à 16, caractérisé en ce que R représente le radical hydrocarboné d'acides gras dimères.

**18.** Dioxyde de silicium fortement dispersé selon la revendication 13 ou 14, caractérisé en ce que R représente un radical hydrocarboné aliphatique en $C_6$ à $C_{26}$ qui est interrompu par de 3 à 13 atomes d'oxygène.

**19.** Dioxyde de silicium fortement dispersé selon la revendication 13 ou 14, caractérisé en ce que R

représente un radical hydrocarboné aliphatique en $C_{70}$ à $C_{90}$ qui est interrompu par deux groupes carbonamide.

**20.** Dioxyde de silicium fortement dispersé selon une ou plusieurs des revendications 13 à 19, caractérisé en ce que R' représente $-Z-(Q)_y-(OH)_x$ , où x et y ont les significations données ci-dessus.

**21.** Dioxyde de silicium fortement dispersé selon une ou plusieurs des revendications 13 à 20, caractérisé en ce qu'il est recouvert d'au moins 1% en poids de compoés de formule I.

**22.** Dioxyde de silicium fortement dispersé selon une ou plusieurs des revendications 13 à 20, caractérisé en ce qu'il est recouvert d'au moins 3% en poids de composés de formule I.

**23.** Dioxyde de silicium fortement dispersé selon une ou plusieurs des revendications 13 à 20, caractérisé en ce qu'il est recouvert d'au moins 5% en poids de composés de formule I.

**24.** Application du dioxyde de silicium fortement dispersé selon une ou plusieurs des revendications 13 à 23 à la thixotropisation des préparations liquides.